# EUROPEAN PATENT SPECIFICATION

(11) **EP 0 504 965 B1**
(45) Date of publication and mention of the grant of the patent: **11.01.1995**
(21) Application number: 92200618.4
(22) Date of filing: 03.03.1992
(51) Int. Cl.: B60T 13/74, F16D 65/34, F16D 65/21, F16D 65/27

(54) **Electrically actuated brake**
Elektrisch betätigte Bremse
Frein actionné électriquement

(30) Priority: 21.03.1991 US 672816
(43) Date of publication of application: 23.09.1992
(73) Proprietor: GENERAL MOTORS CORPORATION, Detroit Michigan 48202 (US)
(72) Inventor: Hickey, Gregory Michael, Dayton, Ohio 45459 (US); Kozak, Michael John, West Carrollton, Ohio 45449 (US); Green, Norbert John, Jr., Trotwood, Ohio 45426 (US)
(74) Representative: Denton, Michael John

(56) References cited:
- EP-A- 0 125 871
- EP-A- 0 398 546
- WO-A-89/03490
- US-A- 4 809 824

## Description

The field of the present invention is that of electrically actuated brakes for automotive applications. More particularly, the field of the present invention is that of an electrically actuated brake which has means for adjusting the position of the brake shoes as the shoe lining wears.

It has come to pass in the pursuit of an improved vehicle brake, various electrically actuated brakes have been brought forth. An example of such an electrically actuated brake is shown and described in EP-A-0398546 which discloses the prior art portion of claim 1, and, the disclosure of which is incorporated by reference herein.

To prevent any drag occurring in the brake during the normal movement of the vehicle it is desirable that the friction elements be held away from the brake drum or rotor as far as possible for the prevention of drag. By friction elements is meant shoes in drum type brakes or pads in caliper type brakes - the present invention can be utilized in either type of brake. However the present disclosure of the invention will mainly be described in the embodiment of a drum type brake. A countervailing design restraint is that the friction element should be held as close to the drum or rotor to minimize the actuation time of the brake. The minimization of actuation time is even more critical if the electrically actuated brake is being utilized in an anti-lock braking (ABS) or traction control (TC) or any other braking system which utilizes feedback information from the vehicle wheel being braked to automatically modify the actuation force.

One approach to adjust the position of the brake linings (shoes or pads) is to utilize electronic sensors to determine the angular rotation of the motor rotor which actuates the brakes. The angular rotation is stored in a memory. Upon wear of the brake linings increased rotation of the motor rotor will occur. A controller will compare the new value for angular rotation and thereafter signal the motor to limit the rotation in the releasing direction so that on the next braking cycle the brake linings will be in an adjusted position.

After adjustment has occurred the controller must again reset within its memory the new position of the motor rotor and, after further wear of the brake lining, another cycle of adjustment will occur. The above approach is often difficult to technically achieve and relies upon a plurality of sensors, and programming for a controller, which in most instances is not preferable. Additionally, the above noted adjustment approach requires the motor of the actuator to have a controlled rotation upon the releasing cycle. Other factors which discourage such a system is the added weight which the hardware adds to the braking system, a feature which conflicts with the environmentally mandated desire of reducing vehicle weight.

It is preferable to allow the rotor of the motor to freewheel to the release position and to achieve any adjustment automatically in a mechanically actuated means which is devoid of any requirement for involvement of an electronic sensor or controller.

To meet the above described goals, the present invention is brought forth. An electrically actuated brake in accordance with the present invention is characterised by the features specified in the characterising portion of claim 1.

The present invention provides a wear adjuster for an electrically actuated brake which makes adjustment automatically and deletes any requirement for involvement of an electronic sensor or controller.

The present invention will now be described, by way of example, with reference to the accompanying drawings, in which:-
Figure 1 is a front elevational view of a preferred embodiment of electrically actuated brake in accordance with the present invention with portions therein section;
Figures 2 and 3 are section views taken from Figure 1 along lines 2-2 and 3-3 respectively;
Figure 4 is a sectional view taken along line 4-4 of Figure 3;
Figure 5 is a veiw similar to that of Figure 4 with the illustrated components having moved; and
Figure 6 is an alternate preferred embodiment of the present invention illustrated in a view similar to that of Figure 4.

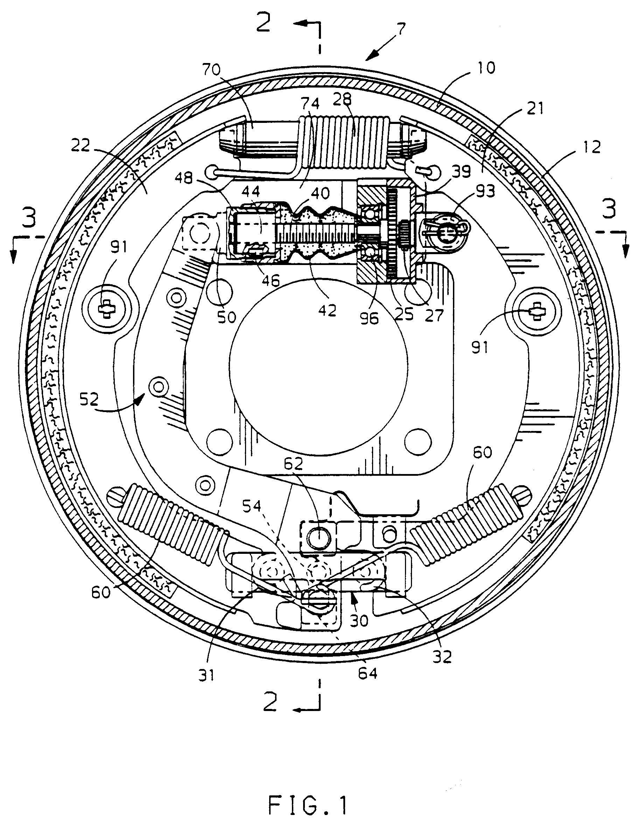

Referring to Figures 1-4 the drum brake assembly 7 of the present invention has a conventional brake drum 10 (an outline of which is shown) which is provided for connection to a vehicle wheel. Attached to the vehicle is the backing plate 12 traditionally mounted to the axial housing. Friction means in the form of secondary 22 and primary 21 brake shoes are mounted by spring loaded pins 91 to bias them towards the backing plate. A spring 28 holds one end of the primary and secondary brake shoes 21, 22 against a stop 70. At their other ends the primary and secondary brake shoes 21, 22 contact an anchor 30 with pins 31 and 32 which is fixed with respect to the backing plate 12. During brake actuation the primary and secondary brake shoes 21, 22 move apart from one another away from the anchor 30.

A power screw 40 is rotatively mounted on the backing plate 12 and held in position by a bearing 96. The power screw 40 is covered by a boot 42 and is threadably engaged with a non-rotative nut 44. The nut 44 is keyed at 46 into a frame member 48 to prevent its rotation. The frame member 48 has an extension 50 (Figure 1) which is pivotally connected to an apply lever 52. The apply lever 52 is of the shape of a bent arm and has a loss motion pivotal connection with the backing plate 12 intermediate the two anchors pins 32 and 31 for the primary and secondary brake shoes 21, 22 by way of a pin 54.

Each brake shoe 21, 22 has a return spring 60 for biasing its associated brake shoe towards the anchor 30. The apply lever 52 has pivotal movement with respect to the brake shoes 21, 22 by shoe actuators 62, 64 which contact portions of the brake shoes. Linear movement of the non-rotative nut 44 to the right, as shown in Figure 1, on actuation of the brake will cause the lever 52 to rotate clockwise on the pin 54 causing the brake shoes 21, 22 to be contacted and moved in an outward direction. The return springs 60 will cause the brake shoes 21, 22 to return to the non-actuated position.

A housing or frame 63 is provided which mounts an actuating motor 74 to the backing plate 12. An extension 76 of the frame 63 mounts a mechanical, electrical, hydraulic or thermal actuator 78 for parking brake actuation. A pinion 24 of a gear train is connected to rotor 82 of the motor 74.

The motor 74 drives the power screw 40 via actuator gears 24 and 25. Connected to the rotor 82 is a parking brake drum 84. Surrounding the parking brake drum 84 is a coil spring 86 which has one end 57 which is generally fixed relative to the frame 63. The coil spring 86 is configured in such manner that, on parking brake actuation, rotation of the rotor 82 of the motor 74 in a direction to release the brake to a non-activated position will cause the parking brake drum 84 to be gripped by the coil spring 86 and be restrained from rotation. Therefore, once activated the brake shoes 21, 22 remain activated. To allow the release of the brake shoes 21, 22 from the activated position, there is a linear actuator rod 89 with a hand 90 operatively associated with the free end 92 of the coil spring 86. Extension of rod 89 makes the hand 90 contact the free end 92 of the coil spring 86, expanding the coil spring to release its grip on the parking brake drum 84, thereby allowing free motion of the motor 74. Further details of the above arrangement can be found in EP-A-0398546, mentioned above. In an alternate embodiment (not shown) the parking brake lock can be incorporated into the motor 74.

The actuator means of the brake assembly 7 includes the apply lever 52, non-rotative nut 44, power screw 40, and meshing actuator gears 25, 24. The rotor 82 is angularly fixed with the actuator gear 24. Torsionally associated with the rotor 82 of the motor 74 is a first rotative member 27 which is connected with an extension of the power screw 40.

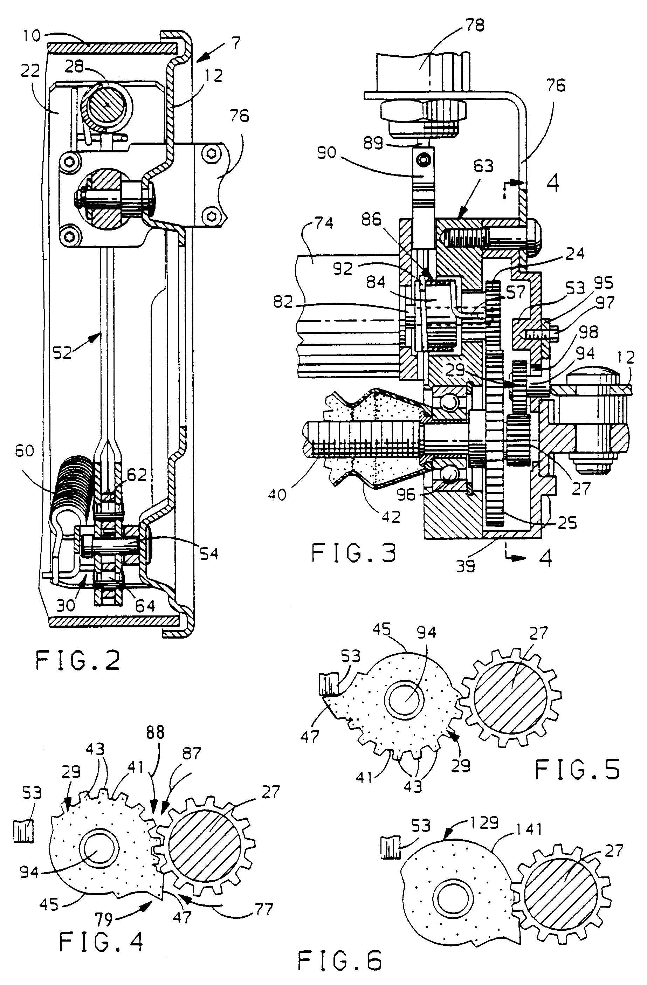

Next to the first rotative member 27 is a second rotative member 29. The second rotative member 29 is typically fabricated from a polymeric material. The second rotative member 29 has a first surface 41 with a series of gear teeth 43 for making torsional transferring engagement with the first rotative member 27 when the brake is being applied. In the applying operation, the first and second rotative members 27, 29 rotate in a direction indicated by arrows 87, 88 respectively in Figure 4. When the brake is being released the first and second rotative members 27, 29 rotate in a direction indicated by arrows 77, 79 respectively.

The second rotative member 29 has a second surface 45 for non-torsional transferring engagement with the first rotative member 27. The second rotative member 29 also has a generally radial extension 47 for limiting the angular rotation of the second rotative member with respect to the first rotative member 27.

The first and second rotative members 27,29 cooperate to provide the wear adjuster of the present invention. On brake application, by virtue of its torsional connection with the rotor 82, the first rotative member 27 will rotate in the direction of arrow 87 causing the second rotative member 29 to rotate in the direction of arrow 88. Upon release of the brake, the motor 74 will be deactivated and allowed to assume a freewheeling condition. The return springs 60 will cause the brake shoes 21, 22 to return to their prior position and by virtue of interaction with the apply lever 52, the non-rotative nut 44 will cause the power screw 40 to rotate in the opposite direction causing the first rotative member 27 to rotate in the direction of arrow 77 and the second rotative member 29 to rotate in the direction of arrow 79.

If sufficient wear of the brake linings on each brake shoe 21, 22 has occurred, upon actuation of the motor 74 the first rotative member 27 will rotate the second rotative member 29 to such an extent that the first surface 41 will no longer be in contact with the first rotative member, and, instead, the second surface 45 of the second rotative member will now be adjacent the first rotative member 27 (as shown in Figure 5). Since the second surface 45 has non-torsional transferring engagement with the first rotative member 27, the motor 74 will be allowed to fully actuate the brake shoes 21, 22 outward to ensure engagement with the brake drum 10, and, as a consequence, the first rotative member 27 will continue to rotate in the direction of arrow 87. The radial extension 47 at this point will make contact with an abutment member 53 to prevent further rotation of the second rotative member 29 in the direction of arrow 88. The abutment member 53 is joined to a housing 39 of the brake 7. The combination of the compliance of the general radial extension 47 with the abutment member 53 biases the second rotative member 29 in a direction to re-engage the first surface 41 of the second rotative member 29 with the first rotative member 27 when the brake is released.

When the brakes are again released the first rotative member 27 will again rotate in a direction shown by arrow 77. The biasing provided by the combination of the generally radially member 47 in contact with abutment member 53 will urge the second rotative member 29 so that it will again engage the first surface 41 to the first rotative member 27 and rotate the second rotative member in the direction of arrow 79. However the angular alignment between the first and second rotative members 27, 29 will be changed by an angular amount corresponding to the amount of wear adjustment of the brake shoes 21, 22 outward relating to the increment of adjustment of the wear adjuster. Therefore upon re-engagement with the first rotative member 27, the second rotative member 29 will have moved angularly slightly with respect to the first rotative member 27.

Movement of the second rotative member 29 back in the releasing direction 79 will cause the generally radial extension 47 to act as a stop means limiting the relative angular movement with the first rotative member 27. This limiting effect will now fix the newly adjusted position of the brake shoes 21, 22 at such a point to where the brake shoes 21, 22 are now more adjacent to the brake drum 10 in compensation for the wear of the brake shoes.

The second rotative member 29 rotates on a shaft 94 connected with retainer portion 95 which is threadably connected behind the abutment member 53 by fastener 97. The above arrangement provides the means to allow for replacement of the brake shoes 21, 22. When changing the brake shoes 21, 22, the fastener 97 is removed and, by the retainer portion 95, the shaft 94 is pulled into a slot 98 in the housing 39 allowing the second rotative member 29 to be linearly displaced towards the abutment member 53 causing the gear teeth 43 or radial extension 47 to come out of engagement with the first rotative member 27. After installation of the new brake shoes, the second rotative member 29 is moved back into position to engage the gear teeth 43 or radial extension 47 with the first rotative member 27. The retainer 95 is repositioned and the fastener 97 is inserted. The wear adjustment mechanism is again ready.

Figure 6 refers to an alternate embodiment of the present invention wherein the second rotative member 129 does not have any gear type teeth and the gear type teeth of the first rotative member 27 simply make torsional transferring contact by engagement with and deformation of the first surface 141 of the second rotative member. In an alternative embodiment (not shown) the function of biasing the second rotative member in such a manner to engage the first surface with the first rotative member can be accomplished by a torsional spring.

## Claims

1. An electrically actuated brake comprising actuator means (52,40,44,24,25) for moving friction means (21,22) into contact with means (10) attached to a vehicle wheel; an electric motor (74) with a rotor (82) torsionally associated with the actuator means to power the same for actuating the friction means; means (60) for returning the friction means from an actuated position to a release position; characterised by wear adjustment means comprising a first rotative member (27) torsionally associated with the rotor (82) for rotation in a first direction (87) on actuation of the friction means (21,22) and rotation in a second, opposite, direction (77) on release of the friction means; a second rotative member (29) having a first surface (41) engageable with the first rotative member for making torsional transferring engagement with the first rotative member when the first rotative member is rotating in the first or the second direction, the second rotative member having a second surface (45) which is disengaged from the first rotative member when the first rotative member has rotated in the first direction beyond a predetermined limit due to wear of the friction means; stop means (47) for limiting the angular rotation of the first and second rotative members when the first surface (41) of the second rotative member is in torsionally transferring engagement with the first rotative member; and biasing means (47,53) for biasing the second rotative member to engage the first surface of the second rotative member with the first rotative member when the second surface of the second rotative member is disengaged from the first rotative member.

2. An electrically actuated brake as claimed in claim 1, wherein at least one of the first and second rotative members (27, 29) has gear type teeth (43).

3. An electrically actuated brake as claimed in claim 2, wherein both the first and second rotative members (27,29) have gear type teeth.

4. An electrically actuated brake as claimed in any one of claims 1 to 3, wherein the stop means includes a radial projection (47) on the second rotative member (29) which can make contact with the first rotative member (27).

5. An electrically actuated brake as claimed in any one of claims 1 to 3, wherein the biasing means includes a generally projecting radial member (47) which can make compliant contact with a physical abutment (53).

6. An electrically actuated brake as claimed in claim 4, wherein the projecting radial member (47) also provides the function of the stop means.

7. An electrically actuated brake as claimed in any one of claims 1 to 6, including means (94,95,97) allowing replacement of the friction means (21,22) after wear adjustment has occurred.

## Patentansprüche

1. Eine elektrisch betätigte Bremse mit einem Betätigermittel (52, 40, 44, 24, 25) zum Bewegen eines Reibungsmittels (21, 22) in Kontakt mit einem Mittel (10), das an einem Fahrzeugrad angebracht ist; einem elektrischen Motor (74) mit einem Rotor (82), der mit dem Betätigermittel torsionsmäßig verbunden ist, um denselben zum Betätigen des Reibungsmittels anzutreiben; einem Mittel (60) zum Zurückführen des Reibungsmittels aus einer betätigten Position zu einer Löseposition; **gekennzeichnet** durch
ein Abnutzungseinstellmittel mit einem ersten Drehglied (27), das mit dem Rotor (82) zur Rotation in einer ersten Richtung (87) auf die Betätigung des Reibungsmittels (21, 22) hin und die Rotation in einer zweiten entgegengesetzten Richtung (77) auf das Lösen des Reibungsmittels hin torsionsmäßig verbunden ist; einem zweiten Drehglied (29) mit einer ersten Oberfläche (41), die mit dem ersten Drehglied in Eingriff treten kann, um torsionsübertragenden Eingriff mit dem ersten Drehglied herzustellen, wenn sich das erste Drehglied in der ersten oder der zweiten Richtung dreht, wobei das zweite Drehglied eine zweite Oberfläche (45) aufweist, welche von dem ersten Drehglied außer Eingriff getreten ist, wenn sich das erste Drehglied in der ersten Richtung über einen vorbestimmten Grenzwert aufgrund der Abnutzung des Reibungsmittels gedreht hat; ein Hemmnismittel (47) zum Begrenzen der Winkelrotation der ersten und zweiten Drehglieder, wenn die erste Oberfläche (41) des zweiten Drehgliedes sich in torsionsübertragendem Eingriff mit dem ersten Drehglied befindet; und ein Vorspannmittel (47, 53) zum Vorspannen des zweiten Drehgliedes, um die erste Oberfläche des zweiten Drehgliedes mit dem ersten Drehglied in Eingriff zu bringen, wenn die zweite Oberfläche des zweiten Drehgliedes von dem ersten Drehglied außer Eingriff getreten ist.

2. Eine elektrisch betätigte Bremse nach Anspruch 1, worin zumindest eines der ersten und zweiten Drehglieder (27, 29) Zähne (43) des Zahnradtypus aufweist.

3. Eine elektrisch betätigte Bremse nach Anspruch 2, worin beide, die ersten und zweiten Drehglieder (27, 29), Zähne des Zahnradtypus aufweisen.

4. Eine elektrisch betätigte Bremse nach einem der Ansprüche 1 bis 3,
worin das Hemmnismittel einen radialen Vorsprung (47) auf dem zweiten Drehglied (29) umfaßt, welcher Kontakt mit dem ersten Drehglied (27) herstellen kann.

5. Eine elektrisch betätigte Bremse nach einem der Ansprüche 1 bis 3,
worin das Vorspannmittel ein allgemein vorstehendes radiales Glied (47) umfaßt, welches nachgiebige Berührung mit einem physikalischen Anschlag (53) herstellen kann.

6. Eine elektrisch betätigte Bremse nach Anspruch 4, worin das vorstehende Radialglied (47) auch die Funktion des Hemmnismittels vorsieht.

7. Eine elektrisch betätigte Bremse nach einem der Ansprüche 1 bis 6,
die ein Mittel (94, 95, 97) umfaßt, das den Austausch des Reibungsmittels (21, 22) erlaubt, nachdem Abnutzungseinstellung aufgetreten ist.

## Revendications

1. Frein à commande électrique comprenant un dispositif à organe de manoeuvre (52, 40, 44, 24, 25) destiné à déplacer un dispositif de friction (21, 22) au contact d'un dispositif (10) qui est fixé à un roue de véhicule, un moteur électrique (74) ayant un rotor (82) associé par torsion au dispositif à organe de manoeuvre pour actionner celui-ci pour la manoeuvre du dispositif de friction, et un dispositif (60) de retour du dispositif de friction d'une position commandée à une position libérée, caractérisé par un dispositif d'ajustement d'usure qui comporte un premier organe rotatif (27) associé par torsion au rotor (82) afin qu'il tourne dans un premier sens (87) lors de la manoeuvre du dispositif de friction (21, 22) et qu'il tourne dans un second sens opposé (77) lors de la libération du dispositif de friction, un second organe rotatif (29) ayant une première surface (41) destinée à coopérer avec le premier organe rotatif et destinée à coopérer par transfert de torsion avec le premier organe rotatif lorsque ce premier organe rotatif tourne dans le premier ou le second sens, le second organe rotatif ayant une seconde surface (45) qui est séparée du premier organe rotatif lorsque le premier organe rotatif a tourné dans le premier sens au-delà d'une limite prédéterminée à la suite de l'usure du dispositif de friction, un dispositif d'arrêt (47) destiné à limiter la rotation angulaire du premier et du second organe rotatif lorsque la première surface (41) du second organe rotatif est en coopération par transfert de torsion avec le premier organe rotatif, et un dispositif (47, 53) de rappel du second organe rotatif afin qu'il mette la première surface du second organe rotatif au contact du premier organe rotatif lorsque la seconde surface du second organe rotatif est séparée du premier organe rotatif.

2. Frein à commande électrique selon la revendication 1, dans lequel l'un au moins des premier et second organes rotatifs (27, 29) a des dents (43) du type d'un engrenage.

3. Frein à commande électrique selon la revendication 2, dans lequel le premier et le second organe rotatif (27, 29) ont tous deux des dents du type d'un engrenage.

4. Frein à commande électrique selon l'une quelconque des revendications 1 à 3, dans lequel le dispositif d'arrêt comprend une saillie radiale (47) sur le second organe rotatif (29) qui peut être au contact du premier organe rotatif (27).

5. Frein à commande électrique selon l'une quelconque des revendications 1 à 3, dans lequel le dispositif de rappel comporte un organe radial (47) en saillie de façon générale et qui peut venir en contact élastique avec une butée physique (53).

6. Frein à commande électrique selon la revendication 4, dans lequel l'organe radial (47) en saillie a aussi la fonction du dispositif d'arrêt.

7. Frein à commande électrique selon l'une quelconque des revendications 1 à 6, comprenant un dispositif (94, 95, 97) qui permet le remplacement du dispositif de friction (21, 22) après l'ajustement de l'usure.
